# EUROPÄISCHE PATENTSCHRIFT

(11) **EP 4 214 421 B1**
(45) Veröffentlichungstag und Bekanntmachung des Hinweises auf die Patenterteilung: **17.07.2024**
(21) Anmeldenummer: 21777213.6
(22) Anmeldetag: 07.09.2021
(51) Int. Cl.: F16D 1/09, F16D 1/092, F16C 35/073

(54) **VERBINDUNGSSYSTEM, INSBESONDERE WELLENANORDNUNG**
CONNECTION SYSTEM, IN PARTICULAR SHAFT ARRANGEMENT
SYSTEME DE CONNECTION, EN PARTICULIER ARRANGEMENT POUR ARBRE

(30) Priorität: 16.09.2020 DE 102020005676
(43) Veröffentlichungstag der Anmeldung: 26.07.2023
(73) Patentinhaber: SEW-EURODRIVE GmbH & Co. KG, 76646 Bruchsal (DE)
(72) Erfinder: HUGELMANN, Martin, 76676 Graben-Neudorf (DE); FIGULI, Daniel, 76646 Bruchsal (DE)
(86) Internationale Anmeldenummer: PCT/EP2021/074619
(87) Internationale Veröffentlichungsnummer: WO 2022/058205

(56) Entgegenhaltungen:
- DE-A1- 4 230 941
- DE-C1- 10 060 037
- GB-A- 157 937
- US-A- 2 811 861

## Beschreibung

Die Erfindung betrifft ein Verbindungssystem, insbesondere Wellenanordnung.

Aus der DE 42 30 941 A1 ist eine Spannverbindung zur Befestigung einer Hohlwelle auf einer Welle bekannt.

Aus der DE 100 60 037 C1 ist als nächstliegender Stand der Technik ebenfalls ein Verbindungssystem zur kraftschlüssigen Verbindung einer Welle mit einer Hohlwelle bekannt.

### Aus der US 2 811 861 A ist eine Adapterkupplung bekannt.

### Aus der GB 157 937 A ist ein verbessertes Wälzlager bekannt.

Der Erfindung liegt daher die Aufgabe zugrunde, ein hohes Drehmoment zu übertragen. Erfindungsgemäß wird die Aufgabe bei dem Verbindungssystem nach den in Anspruch 1 angegebenen Merkmalen gelöst.

Wichtige Merkmale der Erfindung bei dem Verbindungssystem, insbesondere Wellenanordnung, sind, dass es
- eine Welle,
- eine Hohlwelle,
- einen Pressring,
- einen ersten Ring, der auf die Welle aufgesteckt ist,
- einen zweiten Ring,
- ein Lager und
- ein Gehäuseteil aufweist,
wobei die Hohlwelle über das im Gehäuseteil aufgenommene Lager drehbar gelagert ist,

insbesondere wobei die Welle in die Hohlwelle zumindest teilweise eingesteckt ist,
wobei die Hohlwelle einen innenkonischen Bereich aufweist, insbesondere in welchem in axialer Richtung die radiale Wandstärke der Hohlwelle zunimmt,
wobei der erste Ring einen ersten außenkonischen Bereich und einen, insbesondere an den ersten außenkonischen Bereich angrenzenden, zweiten außenkonischen Bereich aufweist,
wobei der erste außenkonische Bereich des ersten Rings am innenkonischen Bereich der Hohlwelle anliegt und/oder zumindest ein Teilbereich des ersten außenkonischen Bereichs des ersten Rings radial zwischen Welle und Hohlwelle angeordnet ist,
wobei der zweite Ring den ersten Ring radial umschließt und/oder umgibt,
wobei der Pressring sowohl einen Teilbereich der radial äußeren Oberfläche der Hohlwelle als auch zumindest einen Teilbereich der radial äußeren Oberfläche des zweiten Rings berührt und/oder auf diese Teilbereiche aufgesteckt ist.

Von Vorteil ist dabei, dass die durch eine Schrumpfscheibe aufgebrachte Schrumpfscheibe über den Pressring aufgeteilt wird auf die Hohlwelle und den zweiten Ring. Beide sind unterlegt durch den ersten Ring. Somit wird Drehmoment nicht nur von der Hohlwelle über den ersten Ring in die Vollwelle übertragen, sondern auch von der Hohlwelle über den Pressring und den zweiten Ring zum ersten Ring und von dort zur Welle. Auf diese Weise ist also ein höheres Drehmoment übertragbar. Denn das Drehmoment wird von der Hohlwelle zur Welle über zwei Drehmomentübertragungswege übertragen. Ein erster Weg führt von der Hohlwelle über den ersten ring zur Welle. Ein anderer Weg führt von der Hohlwelle über den Pressring und von dort über den zweiten Ring zum ersten Ring und von dort zur Welle.

Bei einer vorteilhaften Ausgestaltung ist der zweite Ring auf den ersten Ring aufgesteckt, wobei der zweite außenkonische Bereich des ersten Rings an einem innenkonischen Bereich des zweiten Rings anliegt. Von Vorteil ist dabei, dass beim Aufstecken der zweite Ring auf den ersten Ring spielfrei zum Anliegen kommt und somit spielfrei verbindbar ist. Beim Aufstecken des ersten Rings liegt dieser somit dicht zwischen der Hohlwelle und der Welle an. Vorzugsweise ist der erste Ring als geschlitzter Ring ausgeführt und somit elastisch leicht verformbar. Insbesondere ist auch der zweite Ring als geschlitzter Ring ausgeführt.

Bei einer vorteilhaften Ausgestaltung ist der in axialer Richtung von dem ersten Ring überdeckte Bereich von dem in axialer Richtung von der Welle überdeckten Bereich umfasst. Von Vorteil ist dabei, dass der erste Ring vollständig auf die Welle aufgesteckt ist.

Bei einer vorteilhaften Ausgestaltung überlappt der in axialer Richtung von dem ersten Ring überdeckte Bereich mit dem in axialer Richtung von der Hohlwelle überdeckten Bereich. Von Vorteil ist dabei, dass der erste Ring zwischen Hohlwelle und Welle teilweise eingeschoben ist.

Bei einer vorteilhaften Ausgestaltung weist der erste Ring einen in axialer Richtung und in radialer Richtung durchgehenden Schlitz auf. Von Vorteil ist dabei, dass die Verformbarkeit verbessert ist, insbesondere beim Aufschrumpfen des ersten Rings auf die Welle.

Bei einer vorteilhaften Ausgestaltung weist der erste Ring weitere Schlitze auf,
wobei die Schlitze in Umfangsrichtung, insbesondere regelmäßig, voneinander beabstandet sind,

insbesondere wobei die weiteren Schlitze entweder in axialer Richtung oder in radialer Richtung nicht durchgehend ausgeführt sind. Von Vorteil ist dabei, dass die Verformbarkeit verbessert ist, insbesondere beim Aufschrumpfen des ersten Rings auf die Welle.

Bei einer vorteilhaften Ausgestaltung grenzt der vom Pressring überdeckte Radialabstandsbereich an denjenigen Radialabstandsbereich an, welcher von demjenigen Teilbereich der Hohlwelle abgedeckt wird, welcher einen axialen Bereich überdeckt, der auch von demjenigen axialen Bereich umfasst wird, welcher vom ersten Ring überdeckt wird. Von Vorteil ist dabei, dass der Pressring direkt auf der Hohlwelle sitzt, radial innerhalb derer der erste Ring hineinragt in den Zwischenbereich zwischen Hohlwelle und Welle.

Bei einer vorteilhaften Ausgestaltung weist der zweite Ring einen nach radial außen hervorstehenden Kragenbereich auf. Von Vorteil ist dabei, dass die Demontage erleichtert ist, da beim Abschrauben der Schraube der Schrumpfscheibe die Druckringe auseinandergedrückt werden und dadurch vom zweiten Druckring der radial hervorstehende Kragen mitgezogen wird, so dass der zweite Ring mit herausgezogen wird.

Bei einer vorteilhaften Ausgestaltung ist der erste und der zweite Ring einstückig, insbesondere einteilig, ausgeführt. Von Vorteil ist dabei, dass eine einfachere Montage ausführbar ist.

Bei einer vorteilhaften Ausgestaltung ist der zweite Ring ein Innenschraubgewinde aufweist, das auf ein Außenschraubgewinde des ersten Rings aufgeschraubt,
insbesondere wobei der vom Außenschraubgewinde in axialer Richtung überdeckte Bereich an den vom zweiten Konusbereich des ersten Rings in axialer Richtung überdeckten Bereich angrenzt,
insbesondere wobei der vom Außenschraubgewinde des ersten Rings in axialer Richtung überdeckte Bereich auf der vom ersten Konusbereich des ersten Rings abgewandten Seite des zweiten Konusbereichs des ersten Rings angeordnet ist. Von Vorteil ist dabei, dass der zweite Ring beim Aufschrauben auf den ersten Ring diesen ersten Ring vorspannt. Somit ist weniger Luft und eine verbesserte Kraftübertragung ermöglicht.

Bei einer vorteilhaften Ausgestaltung weist eine Schrumpfscheibe den Pressring auf. Von Vorteil ist dabei, dass der Pressring von zwei aufeinander zu bewegten Druckringen aufschrumpfbar ist auf den ersten Ring und die Hohlwelle.

Bei einer vorteilhaften Ausgestaltung sind auf den Pressring zwei axial voneinander beabstandete Druckringe aufgesteckt, welche jeweils derartige innenkonusförmige Bereiche aufweisen, die auf derartigen außenkonusförmigen Bereichen des Pressrings aufgesteckt sind, dass mittels axial gerichteter Schrauben die beiden Druckringe aufeinander zu bewegbar sind,
wobei die Schrauben mit ihrem Gewindebereich in Gewindebohrungen des ersten der beiden Druckringe eingeschraubt sind und durch Bohrungen des zweiten der beiden Druckringe hindurchragen, so dass die Schraubenköpfe auf den zweiten der beiden Druckringe drücken. Von Vorteil ist dabei, dass eine kostengünstige Schrumpfscheibe verwendbar ist, die axial allerdings derart breit ist, dass sie nicht nur auf der Hohlwelle, sondern auch auf dem zweiten Ring sitzt. Auf diese Weise sind zwei Drehmomentübertragungswege bewirkbar; davon geht der erste Drehmomentübertragungsweg von der Hohlwelle über den ersten ring zur Welle; der zweite Drehmomentübertragungsweg führt von der Hohlwelle über den Pressring der Schrumpfscheibe zum zweiten Ring und von dort zum ersten Ring.

Bei einer vorteilhaften Ausgestaltung weist insbesondere an ihrem vom konischen Bereich der Hohlwelle abgewandten axialen Endbereich, die Hohlwelle einen zweiten innenkonischen Bereich der Hohlwelle auf,
wobei ein Konusring radial zwischen diesen zweiten innenkonischen Bereich der Hohlwelle und die Welle hineinragt,
insbesondere wobei ein Klemmring auf den Konusring aufgesteckt ist, welcher den Konusring mit der Welle kraftschlüssig verbindet. Von Vorteil ist dabei, dass die Hohlwelle von der Welle beabstandbar und trotzdem koaxial zentrierbar ist. Denn durch die axial beidseitige konische Auflagerung ist die Zentrierung sehr präzise ausführbar.

Bei einer vorteilhaften Ausgestaltung ist die Welle von der Hohlwelle beabstandet. Von Vorteil ist dabei, dass Verspannungen vermeidbar sind. Außerdem ist auch durch Kontakt bewirkte Korrosion verhinderbar.

Bei einer vorteilhaften Ausgestaltung überlappt der von der Mutter überdeckte Radialabstandsbereich mit dem von dem Kragenbereich überdeckten Radialabstandsbereich, insbesondere in einem axialen Bereich, der nicht von dem zweiten Druckring überdeckt ist. Von Vorteil ist dabei, dass das axiale Abziehen einfach ausführbar ist.

Bei einer vorteilhaften Ausgestaltung ist eine Mutter mit ihrem Innengewindebereich auf einen Außengewindebereich des ersten Rings aufgeschraubt,
wobei der zweite Ring formschlüssig mit der Mutter verbunden ist, insbesondere wobei am zweiten Ring ein Haken ausgeformt ist oder der zweite Ring einen Haken aufweist, welcher in einen Hinterschnitt der Mutter eingreift,
wobei der von der Mutter überdeckte Radialabstandsbereich mit dem von dem zweiten Druckring überdeckten Radialabstandsbereich überlappt, insbesondere in einem axialen Bereich, der nicht von dem zweiten Druckring überdeckt ist,
insbesondere wobei während der Demontage der vom zweiten Druckring überdeckte axiale Bereich angrenzt an den von der Mutter überdeckten axialen Bereich. Von Vorteil ist dabei, dass zum Herausziehen die Mutter abschraubbar ist und dabei über den Haken der zweite Ring vom ersten Ring heruntergezogen wird. Wichtig ist dabei, dass der Hinterschnitt in Umfangsrichtung umlaufend und ununterbrochen ist, so dass beim Schauben der Mutter die Eingriffsbedingung des Hakens unveränderlich ist, insbesondere auch wenn die Mutter unter dem Haken gedreht wird.

Weitere Vorteile ergeben sich aus den Unteransprüchen. Die Erfindung ist auf die

Die Erfindung wird nun anhand von schematischen Abbildungen näher erläutert:
In der Figur 1 ist ein erstes erfindungsgemäßes Verbindungssystem im Querschnitt dargestellt, bei dem ein erster Ring 4 zwischen eine mit einer Welle 2 zu verbindende Hohlwelle 1 hineinragt und über einen Pressring 7 sowohl die Hohlwelle 1 als auch ein zweiter Ring 3 auf den ersten Ring 4 gedrückt wird.
In der Figur 2 ist hiervon ein vergrößerter Ausschnitt dargestellt.
In der Figur 3 ist ein zweites erfindungsgemäßes Verbindungssystem dargestellt, bei dem im Unterschied zur Figur 1 ein erstes Ringteil 20 statt des ersten Rings 4 und des zweiten Rings 3 verwendet wird und einen radial hervorstehenden Kragen 21 aufweist.
In der Figur 4 ist hiervon ein vergrößerter Ausschnitt dargestellt.

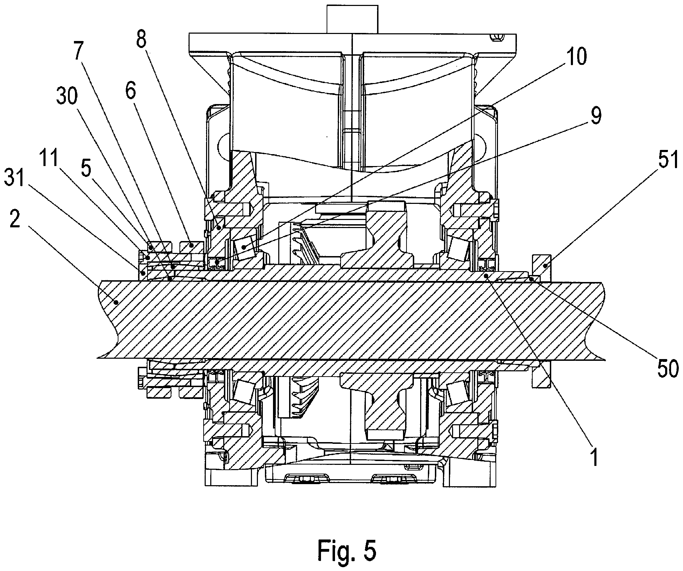

In der Figur 5 ist ein drittes erfindungsgemäßes Verbindungssystem dargestellt, bei dem im Unterschied zur Figur 1 der erste Ring 30 mit dem zweiten Ring 3 schraubverbunden ist und einen radial hervorstehenden Kragen aufweist.
In der Figur 6 ist hiervon ein vergrößerter Ausschnitt dargestellt.

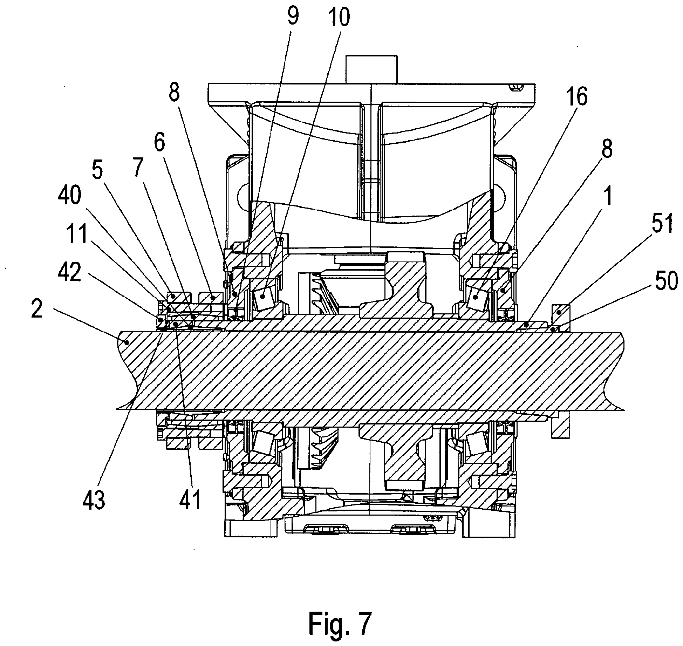

In der Figur 7 ist ein viertes erfindungsgemäßes Verbindungssystem dargestellt, bei dem im Unterschied zur Figur 1 eine mit einem Haken 43 am zweiten Ring 41 gesicherte Mutter 42 den zweiten Ring 41 zur Hohlwelle 1 hindrückt und somit der erste Ring 40 auf die Welle 2 aufgeschrumpft wird.
In der Figur 8 ist hiervon ein vergrößerter Ausschnitt dargestellt.
In der Figur 9 ist das in den Figuren 1 bis 8 nicht dargestellte, andere Ende der Hohlwelle 1 gezeigt.

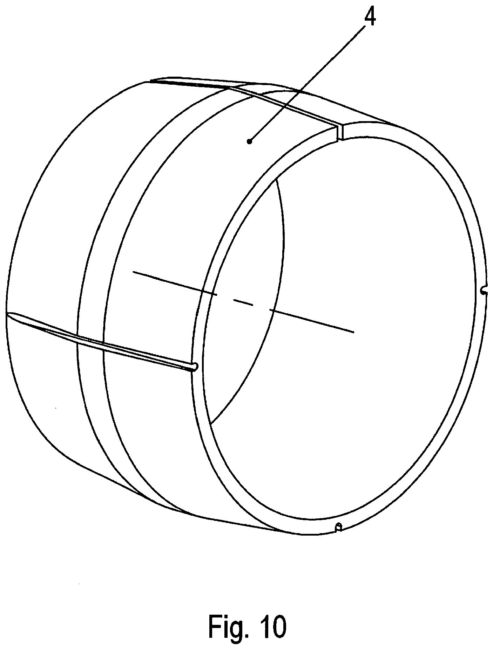

In der Figur 10 ist der erste Ring 4 in Schrägansicht dargestellt, so dass die drei radial nicht durchgehenden Axialschlitze und ein radial durchgehender Axialschlitz erkennbar sind.

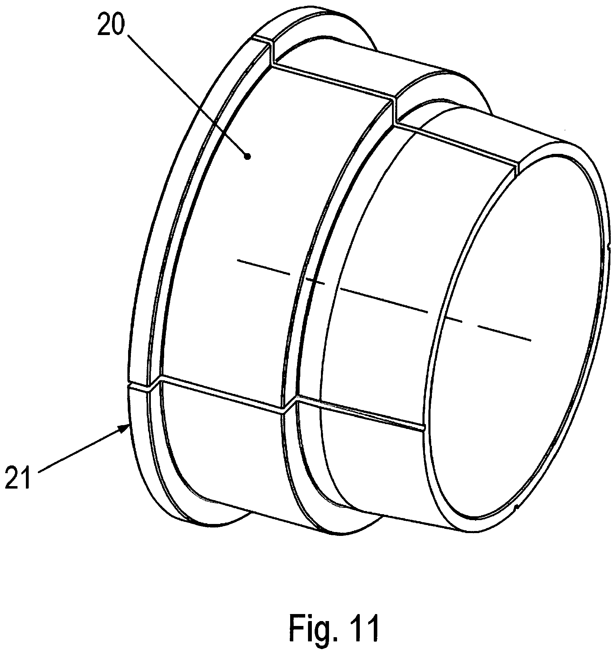

In der Figur 11 ist das erste Ringteil 20 in Schrägansicht dargestellt.

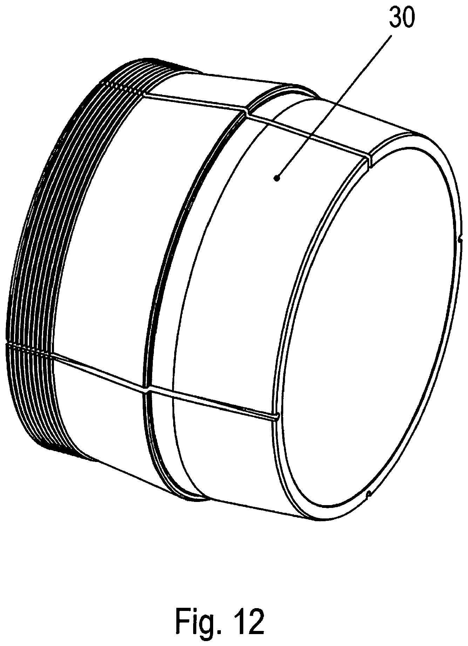

In der Figur 12 ist der erste Ring 30 in Schrägansicht dargestellt.

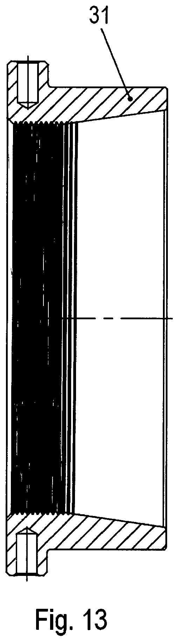

In der Figur 13 ist ein Querschnitt durch einen zweiten Ring 31 dargestellt.

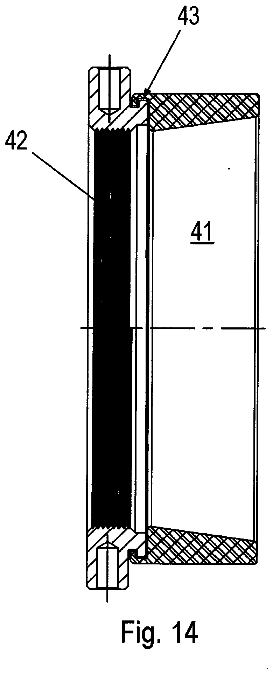

In der Figur 14 ist ein Querschnitt durch den zweiten Ring 41 mit Mutter 42 dargestellt.

Wie in den Figuren dargestellt, weist das Verbindungssystem eine Hohlwelle 1 auf, deren erster axialer Endbereich über ein Lager 10, welches in einem Gehäuseteil 8 eines Getriebes aufgenommen ist, drehbar gelagert ist. Außerdem ist im Gehäuseteil 8 ein Wellendichtring 9 aufgenommen, so dass mit Öl zumindest teilweise befüllte Innenraum des Getriebes zur Umgebung hin abgedichtet ist.

Vorzugsweise ist die Hohlwelle 1 die abtreibende Welle des Getriebes und hierzu mit einem Zahnrad drehfest verbunden, welche im Eingriff mit einem anderen Verzahnungsteil ist.

Die von der Hohlwelle 1 anzutreibende Welle 2, insbesondere Vollwelle, einer Maschine oder Anlage ist durch die Hohlwelle 1 durchgesteckt.

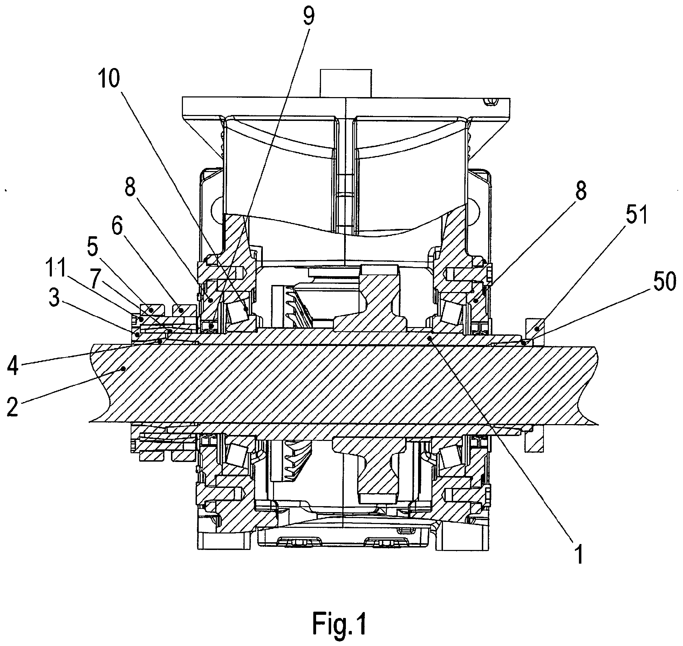

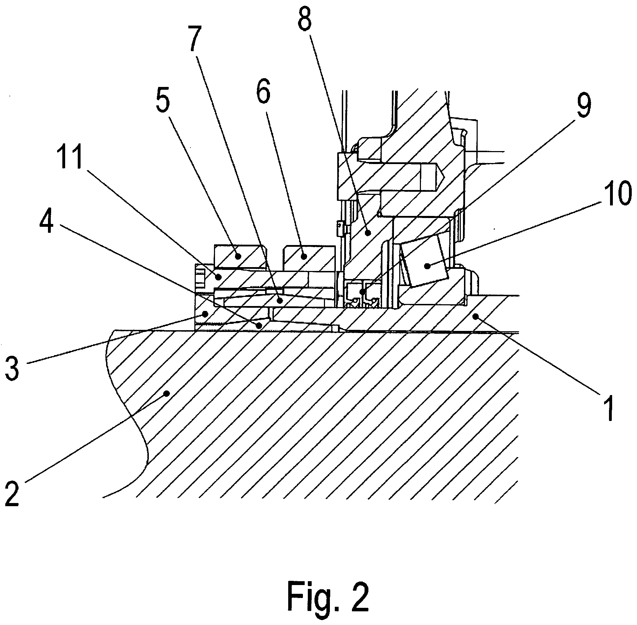

Wie in Figur 1 und 2 dargestellt, ist zur kraftschlüssigen Verbindung der Hohlwelle 1 mit der Welle 2 der erste Ring 4 auf die Welle 2 aufgeschoben und mit einem ersten konischen Bereich in einen Spalt eingeschoben, der zwischen einem innenkonischen Bereich der Hohlwelle 1 und einem zylindrischen Bereich der Welle 2 angeordnet ist.

Die Wandstärke des ersten konischen Bereichs nimmt mit abnehmender Entfernung zum Lager 10 hin ab. Auf der vom Lager 10 abgewandten Seite des ersten konischen Bereichs grenzt der erste konische Bereich an einen zweiten konischen Bereich an, dessen Wandstärke mit abnehmender Entfernung zum Lager zunimmt.

Der erste Ring 4 weist an zwei oder mehr Umfangspositionen jeweilige Axialschlitze auf, insbesondere von denen zumindest einer axial durchgehend ausgeführt ist. Somit ist eine verbesserte elastische Verformbarkeit erreichbar.

Axial neben dem konischen Bereich weist der erste Ring 4 einen zweiten konischen Bereich auf, dessen Konusspitze auf der von der Hohlwelle 1 abgewandten Seite des ersten Rings 4 angeordnet ist. Die Konusspitze des ersten konischen Bereichs ist axial auf der der Hohlwelle 1 zugewandten Seite des ersten Rings 4 angeordnet.

Der zweite Ring 3 ist mit einem dem zweiten konischen Bereich des ersten Rings 4 entsprechenden Konuswinkel ausgeführt.

Der zweite Ring 3 ist axial neben der Hohlwelle 1 angeordnet. Insbesondere ist nur ein vernachlässigbar kleiner Spalt zwischen der Hohlwelle 1 und dem zweiten Ring 3 angeordnet.

Der von dem ersten Ring 4 überdeckte axiale Bereich überlappt sowohl mit dem von der Hohlwelle 1 in axialer Richtung überdeckten Bereich und mit dem vom zweiten Ring 3 in axialer Richtung überdeckten Bereich.

Der Pressring 7 ist auf die Hohlwelle 1 und den zweiten Ring 3 aufgesteckt und weist an seiner radialen Außenseite wiederum zwei gegenläufige konische Bereiche auf. Die Konus der beiden konischen Bereiche sind also voneinander abgewandt ausgerichtet. Auf dem ersten konischen Bereich ist ein erster Druckring 5 und auf dem zweiten konischen Bereich des Pressrings 7 ist ein zweiter Druckring 6 angeordnet. Die beiden Druckringe (5, 6) weisen den konischen Bereichen des Pressrings 7 entsprechende konische Flächen auf, mit denen sie den Pressring 7 jeweils berühren.

Axial gerichtete Schrauben 11 sind durch den ersten Druckring 5 durchgeführt und in eine jeweilige Gewindebohrung des zweiten Druckrings 6 zumindest teilweise eingeschraubt.

Beim Einschrauben der Schrauben 11 in die Gewindebohrungen des zweiten Druckrings 6 werden die beiden Druckringe (5, 6) aufeinander zubewegt und somit infolge der konischen Flächen der Pressring 7 auf die Hohlwelle 1 und den zweiten Ring 3 aufgeschrumpft.

Der erste Ring 4 wirkt als Stützring und fungiert somit als Unterlage zum Unterlegen des zweiten Rings 3 und des konischen Bereichs der Hohlwelle 1.

Der Pressring 7 weist ebenfalls einen ersten konischen Bereich auf, dessen Wandstärke mit abnehmender Entfernung zum Lager 10 hin abnimmt, und einen an diesen ersten konischen Bereich angrenzenden konischen Bereich, dessen Wandstärke mit abnehmender Entfernung zum Lager zunimmt. Auf dem ersten konischen Bereich des Pressrings 7 ist der erste Druckring 6 aufgesteckt und auf dem zweiten konischen Bereich des Pressrings 7 der zweite Druckring 5.

Der Pressring 7 und/oder der erste Ring 4 ist als geschlitzter Ring ausgeführt.

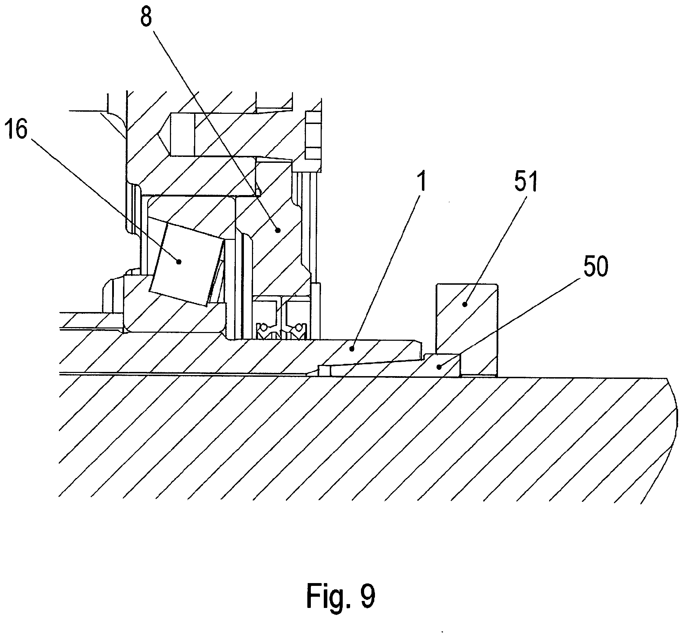

Wie in Figur 9 dargestellt, ist der andere axiale Endbereich der Hohlwelle 1 über ein zweites, im Gehäuseteil 8 aufgenommenes Lager 16 drehbar gelagert und auch über einen zweiten, im Gehäuseteil 8 aufgenommenen Wellendichtring abgedichtet zur Umgebung.

Auch das andere Ende der Hohlwelle 1 weist einen auskragenden konischen Bereich auf, wobei wieder ein Spalt zwischen diesem konischen Bereich und der Welle vorhanden ist, in welchen ein Konusring 50 eingeschoben ist. Dieser Konusring 50 ist mittels eines Klemmrings 51, welcher durch eine vorzugsweise tangential gerichtete Klemmschraube gespannt wird, auf die Hohlwelle 1 aufgeschrumpft. Hierzu umgibt der Klemmring 51 den Konusring 50 radial.

Der Konusring 50 trägt also zur Zentrierung der Hohlwelle 1 relativ zur Welle 2 bei.

Durch den zweiten Ring 3 ist ein höheres Drehmoment übertragbar. Denn indem die beiden Druckringe 5 und 6 aufeinander zu bewegt werden, wird der Pressring 7 zwar einerseits auf die Hohlwelle 1 gedrückt, so dass Drehmoment von der Hohlwelle 1 über den ersten Ring 4 zur Welle 2 hinfließt. Andererseits fließt auch über den Pressring 7 Drehmoment zum zweiten Ring 3 und von dort über den ersten Ring 4 in die Welle 2.

Das Verbindungssystem benötigt auf der vom Lager 10 abgewandten Seite des Wellendichtrings 9 nur den in axialer Richtung, also in Richtung der Drehachse der Hohlwelle 1 und/oder der Welle 2, überdeckten Bereich für die Verbindung, also die Durchleitung des Drehmoments von der Hohlwelle 1 auf die Welle 2. Der in Figur 9 gezeigte andere Endbereich der Hohlwelle 1 trägt nicht oder nur unerheblich zur Drehmomentübertragung bei, auch wenn dort der mit dem Klemmring 51 an die Welle 2 angeklemmte Konusring 50 zwischen der Hohlwelle 1 und der Welle 2 eingeschoben ist.

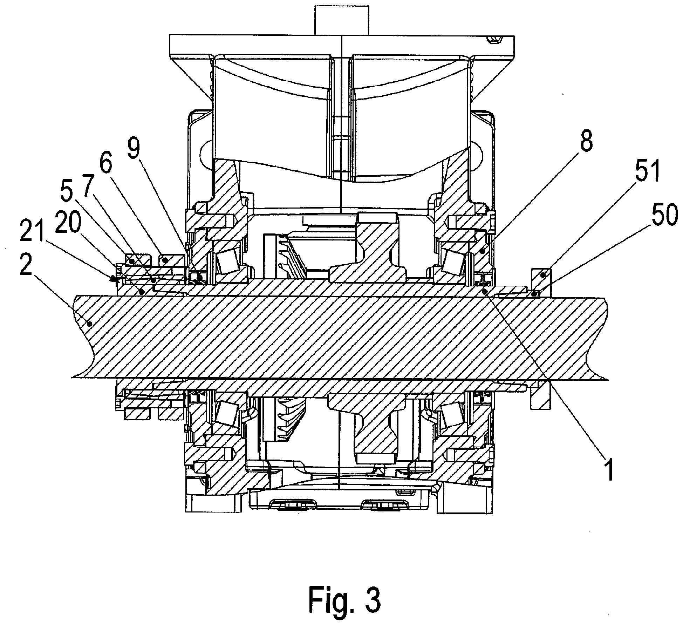

Im Bereich zwischen dem Endbereich nach Figur 3 und dem anderen Endbereich nach Figur 9 ist die Hohlwelle 1 beabstandet von der Welle 2.

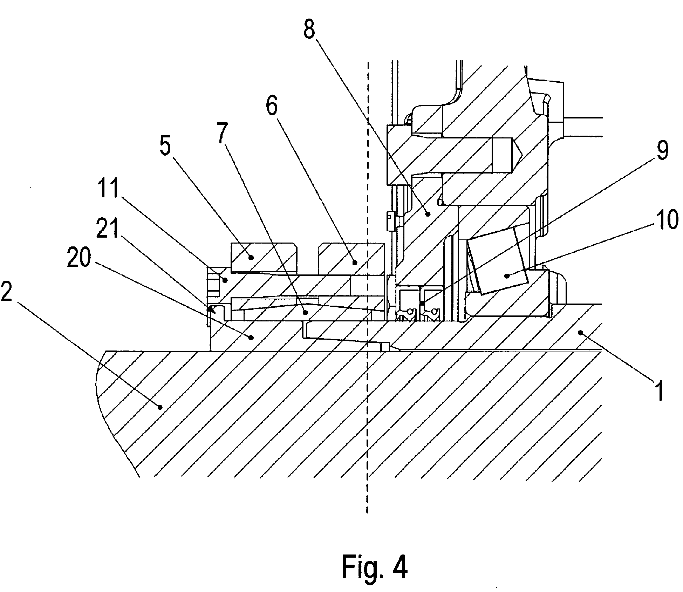

Wie in Figur 3 und 4 gezeigt, ist statt des ersten Rings 4 und des zweiten Rings 3 nach Figur 1 ein einziges Ringteil 20 einsetzbar, das mit seinem außenkonischen Bereich zwischen den innenkonischen Bereich der Hohlwelle 1 und der Welle 2 geschoben wird, so dass die Welle 2 zur Hohlwelle 1 wie in Figur 1 zentriert und koaxial zur Hohlwelle 1 ausgerichtet ist.

Wie auch bei Figur 1 wird beim Ausführungsbeispiel nach Figur 3 beim Einschrauben der Schraube 11 in die Gewindebohrung des zweiten Druckrings 6 der erste Druckring 5 vom Schraubenkopf der Schraube 11 zum zweiten Druckring 6 hingedrückt, so dass mittels der zueinander gegenläufig konisch geformten Innenflächen der beiden Druckringe (5, 6) der Pressring 7 sowohl direkt auf die Hohlwelle 1 als auch auf das erste Ringteil 20 gedrückt wird.

Außerdem weist das erste Ringteil 20 an seinem vom konischen Bereich des ersten Ringteils 20 in axialer Richtung gesehen abgewandten Endbereich einen nach radial außen hervorragenden, in Umfangsrichtung vollständig umlaufenden Kragen 21 auf. Dieser Kragen 21 ermöglicht eine einfache Demontage, indem bei dem Auseinanderbewegen der beiden Druckringe 5 und 6 der erste Druckring 5 auf den Kragen des Ringteils 20 drückt und somit das Ringteil 20 unter dem Pressring 7 axial herauszieht.

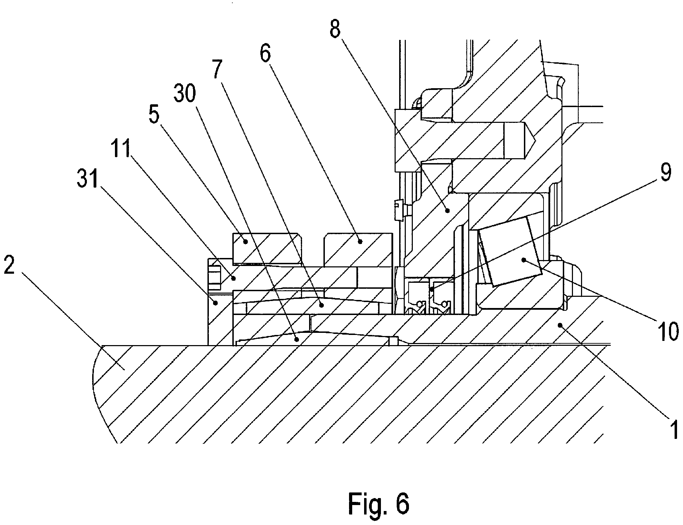

i Wie in Figur 6 gezeigt, ist statt des Ringteils 20 der Ausführung nach Figur 3 ein auf einen ersten Ring 30 aufgeschraubter zweiter Ring 31 einsetzbar. Der zweite Ring 31 weist ein Innengewinde auf, das auf ein dazu passendes Außengewinde des ersten Rings 30 aufschraubbar ist. Somit ist beim Aufschrauben des zweiten Rings 31 auf den ersten Ring 30 der zweite Ring 31 auf den ersten Ring 30 solange aufschraubbar, bis der innenkonische Bereich des zweiten Rings 31 am außenkonischen Bereich des ersten Rings 30 anliegt, insbesondere da deren Konuswinkel denselben Betrag aufweisen.

Der zweite Ring 31 weist wiederum einen in Umfangsrichtung vollständig umlaufenden Kragen auf, der nach radial außen hin hervorragt.

Der erste Ring 30 ist wiederum geschlitzt ausgeführt. Hierzu weist der erste Ring an mehreren Positionen am Umfang einen axial gerichteten Schlitz auf, der entweder radial oder axial durchgehend ausgeführt ist. Insbesondere ist ein einziger der Schlitze axial und/oder radial durchgehend ausgeführt. Auf diese Weise ist eine erhöhte Elastizität erreichbar.

Vorzugswiese sind also mehrere der Schlitze radial und axial nicht durchgehend, wohingegen ein einziger weiterer Schlitz radial und axial durchgehend ist.

Auch der Pressring 7 ist alternativ oder zusätzlich als ein solcher geschlitzter Ring ausführbar.

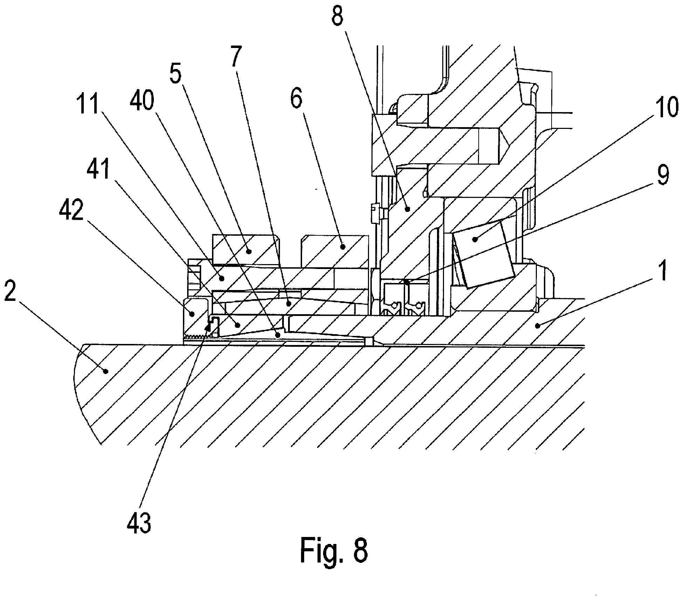

Wie in Figur 8 gezeigt, ist wiederum ein zweiter Ring 41 vom Pressring 7 auf den ersten Ring 40 aufschrumpfbar.

Zusätzlich ist am zweiten Ring 41 ein axial hervorkragender Haken 43 ausgeformt, insbesondere einstückig, also einteilig. Eine Mutter 42 ist auf der von der Hohlwelle 1 axial abgewandten Seite des zweiten Rings 41 mit ihrem Innengewinde aufgeschraubt auf ein Außengewinde eines ersten Rings 40.

Der Haken 43 greift in eine Vertiefung, insbesondere Hinterschnitt, des zweiten Rings 41 ein. Insbesondere ist der Haken 43 in die Vertiefung eingehakt.

Somit ist bei der Demontage die Mutter 42, also bei dem Herausschrauben der Mutter 42, insbesondere wobei die Mutter 42 sich von der Hohlwelle 1 immer weiter entfernt, ermöglicht, dass die Mutter 42 mittels des Hakens 43 den zweiten Ring 41 aus dem Zwischenraum zwischen dem Pressring 7 und dem ersten Ring 40 herauszieht.

Der erste Ring weist hierfür einen Außengewindebereich auf, der zur Hohlwelle 1 hin an einen ersten konischen Bereich anschließt, insbesondere in welchem die Wandstärke mit abnehmender Entfernung zur Hohlwelle 1 zunimmt. An diesen konischen Bereich schließt sich ein weiterer konischer Bereich an, in welchem die Wandstärke mit abnehmender Entfernung zur Hohlwelle 1 abnimmt.

Die axiale Richtung ist parallel zur Richtung der Drehachse der Hohlwelle 1 und/oder Welle 2. Die radiale Richtung bezieht sich auf die Drehachse der Hohlwelle 1, wie auch die Umfangsrichtung.

Unter dem Ausdruck "in axialer Richtung überdeckt" wird alternativ oder zusätzlich auch "axial überdeckt" verstanden.

### Bezugszeichenliste

1 Hohlwelle
2 Welle, insbesondere Vollwelle
3 zweiter Ring
4 erster Ring
5 erster Druckring
6 zweiter Druckring
7 Pressring
8 Gehäuseteil
9 Wellendichtring
10 Lager der Hohlwelle 1
11 Schraube
20 erstes Ringteil
21 nach radial außen hervorstehender, in Umfangsrichtung umlaufender Kragen des ersten
Ringteils 20
30 erster Ring
31 zweiter Ring
40 erster Ring
41 zweiter Ring
42 Mutter
43 Haken
50 Konusring
51 Klemmring mit Klemmschraube

## Patentansprüche

1. Verbindungssystem, insbesondere Wellenanordnung,
aufweisend
- eine Welle (2),
- eine Hohlwelle (1),
- einen Pressring (7),
- einen ersten Ring (4, 40, 30), der auf die **Welle (2)** aufgesteckt ist,
- einen zweiten Ring (3, 31, 41),
- ein Lager und
- ein Gehäuseteil (8),
wobei die Hohlwelle (1) über das im Gehäuseteil (8) aufgenommene Lager drehbar gelagert ist,
wobei die Welle (2) in die Hohlwelle (1) zumindest teilweise eingesteckt ist,
wobei die Hohlwelle (1) einen innenkonischen Bereich aufweist, in welchem in axialer Richtung die radiale Wandstärke der Hohlwelle (1) zunimmt,
wobei der erste Ring (4, 40, 30) einen ersten außenkonischen Bereich und einen, insbesondere an den ersten außenkonischen Bereich angrenzenden, zweiten außenkonischen Bereich aufweist,
wobei der erste außenkonische Bereich des ersten Rings (4, 40, 30) am innenkonischen Bereich der Hohlwelle (1) anliegt und/oder zumindest ein Teilbereich des ersten außenkonischen Bereichs des ersten Rings (4, 40, 30) radial zwischen Welle (2) und Hohlwelle (1) angeordnet ist,
**wobei** der zweite Ring (3, 31, 41) den ersten Ring (4, 40, 30) radial umschließt und/oder umgibt,
und wobei der Pressring (7) sowohl einen Teilbereich der radial äußeren Oberfläche der Hohlwelle (1) als auch zumindest einen Teilbereich der radial äußeren Oberfläche des zweiten Rings (3, 31, 41) berührt und/oder auf diese Teilbereiche aufgesteckt ist.

2. Verbindungssystem nach Anspruch 1
**dadurch gekennzeichnet, dass**
der zweite Ring (3, 31, 41) auf den ersten Ring (4, 40, 30) aufgesteckt ist,
wobei der zweite außenkonische Bereich des ersten Rings (4, 40, 30) an einem innenkonischen Bereich des zweiten Rings (3, 31, 41) anliegt.

3. Verbindungssystem nach einem der vorangegangenen Ansprüche,
**dadurch gekennzeichnet, dass**
der in axialer Richtung von dem ersten Ring (4, 40, 30) überdeckte Bereich von dem in axialer Richtung von der Welle (2) überdeckten Bereich umfasst ist.

4. Verbindungssystem nach einem der vorangegangenen Ansprüche,
**dadurch gekennzeichnet, dass**
der in axialer Richtung von dem ersten Ring (4, 40, 30) überdeckte Bereich mit dem in axialer Richtung von der Hohlwelle (1) überdeckten Bereich überlappt.

5. Verbindungssystem nach einem der vorangegangenen Ansprüche,
**dadurch gekennzeichnet, dass**
der erste Ring (4, 40, 30) einen in axialer Richtung und in radialer Richtung durchgehenden Schlitz aufweist.

6. Verbindungssystem nach einem der vorangegangenen Ansprüche,
**dadurch gekennzeichnet, dass**
der erste Ring (4, 40, 30) weitere Schlitze aufweist,
wobei die Schlitze in Umfangsrichtung, insbesondere regelmäßig, voneinander beabstandet sind,
wobei die weiteren Schlitze entweder in axialer Richtung oder in radialer Richtung nicht durchgehend ausgeführt sind.

7. Verbindungssystem nach einem der vorangegangenen Ansprüche,
**dadurch gekennzeichnet, dass**
der vom Pressring (7) überdeckte Radialabstandsbereich an denjenigen Radialabstandsbereich angrenzt, welcher von demjenigen Teilbereich der Hohlwelle (1) abgedeckt wird, welcher einen axialen Bereich überdeckt, der auch von demjenigen axialen Bereich umfasst wird, welcher vom ersten Ring (4, 40, 30) überdeckt wird.

8. Verbindungssystem nach einem der vorangegangenen Ansprüche,
**dadurch gekennzeichnet, dass**
der zweite Ring (3, 31, 41) einen nach radial außen hervorstehenden Kragenbereich aufweist,
und/oder dass
der erste und der zweite Ring (3, 31, 41) einstückig, insbesondere einteilig, ausgeführt ist.

9. Verbindungssystem nach einem der vorangegangenen Ansprüche,
**dadurch gekennzeichnet, dass**
der zweite Ring (3, 31, 41) ein Innenschraubgewinde aufweist, das auf ein Außenschraubgewinde des ersten Rings (4, 40, 30) aufgeschraubt ist,
insbesondere wobei der vom Außenschraubgewinde in axialer Richtung überdeckte Bereich an den vom zweiten Konusbereich des ersten Rings (4, 40, 30) in axialer Richtung überdeckten Bereich angrenzt,
wobei der vom Außenschraubgewinde des ersten Rings (4, 40, 30) in axialer Richtung überdeckte Bereich auf der vom ersten Konusbereich des ersten Rings (4, 40, 30) abgewandten Seite des zweiten Konusbereichs des ersten Rings (4, 40, 30) angeordnet ist.

10. Verbindungssystem nach einem der vorangegangenen Ansprüche,
**dadurch gekennzeichnet, dass**
eine Schrumpfscheibe den Pressring (7) aufweist.

11. Verbindungssystem nach einem der vorangegangenen Ansprüche,
**dadurch gekennzeichnet, dass**
auf den Pressring (7) zwei axial voneinander beabstandete Druckring (5, 6) aufgesteckt sind, welche jeweils derartige innenkonusförmige Bereiche aufweisen, die auf derartigen außenkonusförmigen Bereichen des Pressrings (7) aufgesteckt sind, dass mittels axial gerichteter Schrauben (11) ie beiden Druckring (5, 6) aufeinander zu bewegbar sind,
wobei die Schrauben mit ihrem Gewindebereich in Gewindebohrungen des ersten der beiden Druckring (5, 6) eingeschraubt sind und durch Bohrungen des zweiten der beiden Druckring (5, 6) hindurchragen, so dass die Schraubenköpfe auf den zweiten der beiden Druckring (5, 6) drücken.

12. Verbindungssystem nach einem der vorangegangenen Ansprüche,
**dadurch gekennzeichnet, dass**
an ihrem vom konischen Bereich der Hohlwelle (1) abgewandten axialen Endbereich, die Hohlwelle (1) einen zweiten innenkonischen Bereich der Hohlwelle (1) aufweist
wobei ein Konusring (50) radial zwischen diesen zweiten innenkonischen Bereich der Hohlwelle (1) und die Welle (2) hineinragt,
insbesondere wobei ein Klemmring (51) auf den Konusring (50) aufgesteckt ist, welcher den Konusring (50) mit der Welle (2) kraftschlüssig verbindet.

13. Verbindungssystem nach einem der vorangegangenen Ansprüche,
**dadurch gekennzeichnet, dass**
die Welle (2) von der Hohlwelle (1) **radial** beabstandet ist.

14. Verbindungssystem nach einem der vorangegangenen Ansprüche,
**dadurch gekennzeichnet, dass**
der von **einer** Mutter (42) überdeckte Radialabstandsbereich mit dem von dem Kragenbereich überdeckten Radialabstandsbereich überlappt, in einem axialen Bereich, der nicht von dem zweiten Druckring (6) überdeckt ist.

15. Verbindungssystem nach einem der vorangegangenen Ansprüche,
**dadurch gekennzeichnet, dass**
eine Mutter (42) mit ihrem Innengewindebereich auf einen Außengewindebereich des ersten Rings (4, 40, 30) aufgeschraubt ist,
wobei der zweite Ring (3, 31, 41) formschlüssig mit der Mutter (42) verbunden ist,
insbesondere wobei am zweiten Ring (3, 31, 41) ein Haken (43) ausgeformt ist oder der zweite Ring (3, 31, 41) einen Haken (43) aufweist, welcher in einen Hinterschnitt der Mutter (42) eingreift,
wobei der von der Mutter (42) überdeckte Radialabstandsbereich mit dem von dem zweiten Druckring (6) überdeckten Radialabstandsbereich überlappt, in einem axialen Bereich, der nicht von dem zweiten Druckring (6) überdeckt ist, insbesondere wobei während der Demontage der vom zweiten Druckring (6) überdeckte axiale Bereich angrenzt an den von der Mutter (42) überdeckten axialen Bereich.

## Claims

1. A connection system, in particular a shaft arrangement,
having
- a shaft (2),
- a hollow shaft (1),
- a press ring (7),
- a first ring (4, 40, 30), which is mounted onto the shaft (2),
- a second ring (3, 31, 41),
- a bearing and
- a housing part (8),
wherein the hollow shaft (1) is rotatably mounted via the bearing received in the housing part (8),
wherein the shaft (2) is at least partially inserted into the hollow shaft (1),
wherein the hollow shaft (1) has an inner cone-shaped region, in which the radial wall thickness of the hollow shaft (1) increases in an axial direction,
wherein the first ring (4, 40, 30) has a first outer cone-shaped region and a second outer cone-shaped region which in particular adjoins the first outer cone-shaped region,
wherein the first outer cone-shaped region of the first ring (4, 40, 30) rests against the inner cone-shaped region of the hollow shaft (1) and/or at least a partial region of the first outer cone-shaped region of the first ring (4, 40, 30) is arranged radially between shaft (2) and hollow shaft (1),
wherein the second ring (3, 31, 41) radially encloses and/or surrounds the first ring (4, 40, 30),
and wherein the press ring (7) contacts both a partial region of the radially outer surface of the hollow shaft (1) and at least a partial region of the radially outer surface of the second ring (3, 31, 41) and/or is mounted onto these partial regions.

2. A connection system according to claim 1,
**characterised in that**
the second ring (3, 31, 41) is mounted onto the first ring (4, 40, 30),
wherein the second outer cone-shaped region of the first ring (4, 40, 30) rests against an inner cone-shaped region of the second ring (3, 31, 41).

3. A connection system according to any one of the preceding claims,
**characterised in that**
the region covered in an axial direction by the first ring (4, 40, 30) is encompassed by the region covered in an axial direction by the shaft (2).

4. A connection system according to any one of the preceding claims,
**characterised in that**
the region covered in an axial direction by the first ring (4, 40, 30) overlaps the region covered in an axial direction by the hollow shaft (1).

5. A connection system according to any one of the preceding claims,
**characterised in that**
the first ring (4, 40, 30) has a slit which is through-passing in an axial direction and in a radial direction.

6. A connection system according to any one of the preceding claims,
**characterised in that**
the first ring (4, 40, 30) has further slits,
wherein the slits are spaced apart from one another in a circumferential direction, in particular regularly,
wherein either in an axial direction or in a radial direction, the further slits are not through-passing.

7. A connection system according to any one of the preceding claims,
**characterised in that**
the radial distance region covered by the press ring (7) adjoins that radial distance region which is covered by that partial region of the hollow shaft (1) which covers an axial region which also is encompassed by that axial region which is covered by the first ring (4, 40, 30).

8. A connection system according to any one of the preceding claims,
**characterised in that**
the second ring (3, 31, 41) has a radially-outwards projecting collar region, and/or **in that**
the first and the second ring (3, 31, 41) are realised in one piece, in particular integrally.

9. A connection system according to any one of the preceding claims,
**characterised in that**
the second ring (3, 31, 41) has an internal screw thread which is screwed onto an external screw thread of the first ring (4, 40, 30),
in particular wherein the region covered in an axial direction by the external screw thread adjoins the region covered in an axial direction by the second conical region of the first ring (4, 40, 30),
wherein the region covered in an axial direction by the external screw thread of the first ring (4, 40, 30) is arranged at that side of the second conical region of the first ring (4, 40, 30) remote from the first conical region of the first ring (4, 40, 30).

10. A connection system according to any one of the preceding claims,
**characterised in that**
a shrink disc has the press ring (7).

11. A connection system according to any one of the preceding claims,
**characterised in that**
two pressure rings (5, 6) axially spaced apart from one another are mounted onto the press ring (7) and in each case have such inner cone-shaped regions mounted on such outer cone-shaped regions of the press ring (7) that the two pressure rings (5, 6) are movable towards one another by means of axially directed screws (11),
wherein the screws are screwed with their threaded region into tapped bores of the first of the two pressure rings (5, 6) and project through bores of the second of the two pressure rings (5, 6), so that the screw heads press onto the second of the two pressure rings (5, 6).

12. A connection system according to any one of the preceding claims,
**characterised in that**
the hollow shaft (1) has a second inner cone-shaped region of the hollow shaft (1), at its axial end-region remote from the conical region of the hollow shaft (1),
wherein a conical ring (50) projects radially between this second inner cone-shaped region of the hollow shaft (1) and the shaft (2),
in particular wherein a clamping ring (51) is mounted onto the conical ring (50) and connects the conical ring (50) to the shaft (2) in a force-locked manner.

13. A connection system according to any one of the preceding claims,
**characterised in that**
the shaft (2) is radially spaced apart from the hollow shaft (1).

14. A connection system according to any one the preceding claims,
**characterised in that**
the radial distance region covered by a nut (42) overlaps the radial distance region covered by the collar region, in an axial region not covered by the second pressure ring (6).

15. A connection system according to any one of the preceding claims,
**characterised in that**
a nut (42) is screwed onto an external threaded region of the first ring (4, 40, 30) by means of its internal threaded region,
wherein the second ring (3, 31, 41) is connected to the nut (42) in a form-locked manner,
in particular wherein a hook (43) is formed on the second ring (3, 31, 41) or the second ring (3, 31, 41) has a hook (43) which engages an undercut of the nut (42),
wherein the radial distance region covered by the nut (42) overlaps the radial distance region covered by the second pressure ring (6), in an axial region not covered by the second pressure ring (6),
in particular wherein during disassembly, the axial region covered by the second pressure ring (6) adjoins the axial region covered by the nut (42).

## Revendications

1. Système de liaison, en particulier agencement d'arbre,
comprenant
- un arbre (2),
- un arbre creux (1),
- une bague de pression (7),
- une première bague (4, 40, 30) enfilée sur l'arbre (2),
- une seconde bague (3, 31, 41),
- un palier et
- une partie boîtier (8),
l'arbre creux (1) étant monté rotatif par l'intermédiaire du palier accueilli dans la partie boîtier (8),
l'arbre (2) étant inséré au moins partiellement dans l'arbre creux (1),
l'arbre creux (1) présentant une région conique intérieure, au sein de laquelle l'épaisseur de paroi radiale de l'arbre creux (1) augmente dans la direction axiale,
la première bague (4, 40, 30) présentant une première région conique extérieure et une seconde région conique extérieure, en particulier adjacente à la première région conique extérieure,
la première région conique extérieure de la première bague (4, 40, 30) étant adjacente à la région conique intérieure de l'arbre creux (1) et/ou au moins une sous-région de la première région conique extérieure de la première bague (4, 40, 30) étant agencée de manière radiale entre l'arbre (2) et l'arbre creux (1),
la seconde bague (3, 31, 41) entourant et/ou enfermant de manière radiale la première bague (4, 40, 30),
et
la bague de pression (7) touchant à la fois une sous-région de la surface radialement extérieure de l'arbre creux (1) et au moins une sous-région de la surface radialement extérieure de la seconde bague (3, 31, 41) et/ou étant enfilée sur lesdites sousrégions.

2. Système de liaison selon la revendication 1
**caractérisé en ce que**
la seconde bague (3, 31, 41) est enfilée sur la première bague (4, 40, 30),
la seconde région conique extérieure de la première bague (4, 40, 30) étant adjacente à une région conique intérieure de la seconde bague (3, 31, 41).

3. Système de liaison selon l'une quelconque des revendications précédentes,
**caractérisé en ce que**
la région recouverte par la première bague (4, 40, 30) dans la direction axiale est comprise dans la région recouverte par l'arbre (2) dans la direction axiale.

4. Système de liaison selon l'une quelconque des revendications précédentes,
**caractérisé en ce que**
la région recouverte par la première bague (4, 40, 30) dans la direction axiale chevauche la région recouverte par l'arbre creux (1) dans la direction axiale.

5. Système de liaison selon l'une quelconque des revendications précédentes,
**caractérisé en ce que**
la première bague (4, 40, 30) présente une fente continue dans la direction axiale et dans la direction radiale.

6. Système de liaison selon l'une quelconque des revendications précédentes,
**caractérisé en ce que**
la première bague (4, 40, 30) présente des fentes supplémentaires,
les fentes étant espacées les unes des autres, en particulier de manière régulière, dans la direction circonférentielle,
les fentes supplémentaires n'étant continues ni dans la direction axiale ni dans la direction radiale.

7. Système de liaison selon l'une quelconque des revendications précédentes,
**caractérisé en ce que**
la région d'espacement radial recouverte par la bague de pression (7) est adjacente à la région d'espacement radial qui est recouverte par la sous-région de l'arbre creux (1) recouvrant une région axiale également comprise dans la région axiale recouverte par la première bague (4, 40, 30).

8. Système de liaison selon l'une quelconque des revendications précédentes,
**caractérisé en ce que**
la seconde bague (3, 31, 41) présente une région de col faisant saillie radialement vers l'extérieur,
et/ou **en ce que**
les première et seconde bagues (3, 31, 41) sont fabriqués d'un seul tenant, en particulier d'une seule pièce.

9. Système de liaison selon l'une quelconque des revendications précédentes,
**caractérisé en ce que**
la seconde bague (3, 31, 41) présente un filetage intérieur qui est vissé sur un filetage extérieur de la première bague (4, 40, 30),
la région recouverte par le filetage extérieur dans la direction axiale étant en particulier adjacente à la région recouverte par la seconde région conique de la première bague (4, 40, 30) dans la direction axiale,
la région recouverte par le filetage extérieur de la première bague (4, 40, 30) dans la direction axiale étant agencée sur le côté de la seconde région conique de la première bague (4, 40, 30) qui est opposé à la première région conique de la première bague (4, 40, 30).

10. Système de liaison selon l'une quelconque des revendications précédentes,
**caractérisé en ce que**
une frette de serrage comprend la bague de pression (7).

11. Système de liaison selon l'une quelconque des revendications précédentes,
**caractérisé en ce que**
sur la bague de pression (7) sont enfilées deux bagues de butée (5, 6) espacées axialement l'une de l'autre et présentant respectivement des régions coniques intérieures qui sont enfilées sur des régions coniques extérieures de la bague de pression (7) de telle manière que les deux bagues de butée (5, 6) peuvent être rapprochées l'une de l'autre au moyen de vis (11) orientées de manière axiale,
les vis étant vissées grâce à leur région filetée dans des alésages taraudés de la première des deux bagues de butée (5, 6) et traversant des alésages de la seconde des deux bagues de butée (5, 6) de sorte que les têtes de vis appuient sur la seconde des deux bagues de butée (5, 6).

12. Système de liaison selon l'une quelconque des revendications précédentes,
**caractérisé en ce que**
au niveau de sa région d'extrémité axiale opposée à la région conique de l'arbre creux (1), l'arbre creux (1) présente une seconde région conique intérieure de l'arbre creux (1),
une bague conique (50) faisant saillie de manière radiale entre ladite seconde région conique intérieure de l'arbre creux (1) et l'arbre (2),
une bague de serrage (51), reliant la bague conique (50) à l'arbre (2) avec verrouillage par complémentarité de force, étant en particulier enfilée sur la bague conique (50).

13. Système de liaison selon l'une quelconque des revendications précédentes,
**caractérisé en ce que**
l'arbre (2) est espacé de manière radiale par rapport à l'arbre creux (1).

14. Système de liaison selon l'une quelconque des revendications précédentes,
**caractérisé en ce que**
la région d'espacement radial recouverte par un écrou (42) chevauche la région d'espacement radial recouverte par la région de col, dans une région axiale qui n'est pas recouverte par la seconde bague de butée (6).

15. Système de liaison selon l'une quelconque des revendications précédentes,
**caractérisé en ce que**
un écrou (42) est vissé grâce à sa région filetée intérieure sur une région filetée extérieure de la première bague (4, 40, 30),
la seconde bague (3, 31, 41) étant reliée à l'écrou (42) avec verrouillage par complémentarité de forme,
un crochet (43) étant en particulier formé au niveau de la seconde bague (3, 31, 41) ou la seconde bague (3, 31, 41).présentant un crochet (43) qui vient en prise dans une contre-dépouille de l'écrou (42),
la région d'espacement radial recouverte par l'écrou (42) chevauchant la région d'espacement radial recouverte par la seconde bague de butée (6), dans une région axiale qui n'est pas recouverte par la seconde bague de butée (6),
lors du démontage, la région axiale recouverte par la seconde bague de butée (6) étant en particulier adjacente à la région axiale recouverte par l'écrou (42).
